(19) Europäisches Patentamt

European Patent Office

Office européen des brevets

(11) Veröffentlichungsnummer: **0 224 865**
**A2**

(12) **EUROPÄISCHE PATENTANMELDUNG**

(21) Anmeldenummer: 86116424.2

(22) Anmeldetag: 18.09.84

(51) Int. Cl.⁴: **B60H 3/06** , B01D 53/00

(30) Priorität: 24.02.84 DE 3406709

(43) Veröffentlichungstag der Anmeldung:
10.06.87 Patentblatt 87/24

(60) Veröffentlichungsnummer der früheren
Anmeldung nach Art. 76 EPÜ: 0 160 010

(84) Benannte Vertragsstaaten:
AT BE CH DE FR GB LI LU NL SE

(71) Anmelder: **Hölter, Heinz, Dipl.-Ing.**
**Beisenstrasse 39-41**
**D-4390 Gladbeck(DE)**

(72) Erfinder: **Hölter, Heinz, Dipl.-Ing.**
**Beisenstrasse 39 - 41**
**D-4390 Gladbeck(DE)**
Erfinder: **Igelbüscher, Heinrich, Dipl.-Ing.**
**Marcq-en-Baroeul-Strasse 60**
**D-4390 Gladbeck(DE)**
Erfinder: **Gresch, Heinrich, Ing. (grad.)**
**Franz-Lehàr-Strasse 25**
**D-4600 Dortmund-Wickede(DE)**
Erfinder: **Dewert, Heribert, Dipl.-Ing.**
**Bahnhofstrasse 23**
**D-4390 Gladbeck(DE)**

(74) Vertreter: **Spalthoff, Adolf, Dipl.-Ing.**
**Pelmanstrasse 31 P.O. Box 34 02 20**
**D-4300 Essen 1(DE)**

(54) **Verfahren zur Herstellung von gesunder Atemluft für den vorzugsweise Busfahrer.**

(57) Um den Nachteil der Atembelastung durch Krankheitserreger, insbesondere für die Fahrer von Bussen, auszuschließen, wird erfindungsgemäß vorgeschlagen, daß die anzusaugende, dem Fahrer - (2) zuzuführende Atemluft zuerst durch einen Chemisorptionsilfter (3) geführt wird, der die durch Straßenverkehr belastete Luft durch die Chemisorption reinigt, um sie dann einer nachgeschalteten Filterstufe (4) zur Abscheidung von Krankheitserregern zuzuführen, und die mehrstufig gereinigte Atemluft vorzugsweise über Kopfdüsenanordnung - (5) dem Fahrer (2) nicht mehr gesundheitsbelastend zugeführt wird. Der Chemisorptionsfilter (3) ist vorzugsweise dem krankheitserregerabscheidenden Filter (4) vorgeschaltet und über vorzugsweise Sensorsteuerung bei entsprechender Belastung der Luft durch Schadstoffe der Chemisorptionsfilter (3) sich automatisch zuschaltet und die gereinigte Luft dem krankheitserregerabscheidenden Filter (4) zwangsweise zuführt. Der krankheitserregerabscheidende Filter (4) kann auch direkt die Luft aus dem vorzugsweise Fahrzeuginneren ohne Vorschaltung des Chemisorptionsfilters (3) absaugen (Figur).

## "Verfahren zur Herstellung von gesunder Atemluft für den vorzugsweise Busfahrer"

Es ist bekannt, daß die Krankfeierquote insbesondere von Autobusfahrern sehr hoch liegt.

Erkältungskrankheiten sind die häufige Ursache.

Bei modernen Stadtbussen muß der Fahrer vielfach nicht nur den Bus steuern, sondern auch gleichzeitig Fahrkarten ausgeben.

Das bedeutet, daß der Fahrer vielfach auch mit der von ausgeatmeten Krankheitserregern belasteten Luft kontaktiert wird.

Gegen Zuglufterscheinungen durch das vielfache Öffnen der Bustüren ist der Fahrer durch Schutz-Glas-Wände sehr gut geschützt.

Es ist bekannt, den Fahrer durch Luftduschen in eine klimatisierte Fahrerzellenanordnung einzubinden, um ihn möglichst von belastenden Fremdeinwirkungen abzusichern.

Weiterhin ist bekannt, die belastenden Schadstoffe, mit denen die Luft im Straßenverkehr angereichert ist, durch Chemisorptionsfilter vom Fahrer fernzuhalten.

Diese Chemisorptionsfilter scheiden Kohlenwasserstoffverbindungen, saure Bestandteile aus der Luft zum größten Teil ab und können auch wunschgerecht die ermüdende CO-Belastung abbauen.

Somit können krebserregende und ermüdende Schadstoffe vom Fahrer ferngehalten werden; jedoch gegen die vielfache bakterienreiche Atmebelastung aus dem Fahrgastraum durch ständig neu hinzusteigende Passagiere wurde bisher kein Schutzmaßnahme getroffen.

Durch die schadstoffreiche Konzentration der zugeblasenen Frischluft aus dem Straßenbereich und die gleichzeitig Atembelastung durch die Passagiere, ist der Fahrer einer Doppelbelastung neben seiner sehr konzentriert zu tätigenden Arbeit ausgesetzt.

Um den Nachteil der Atembelastung durch Krankheitserreger auszuschließend wird erfindungsgemäß vorgeschlagen, dem Fahrer von Stadtbussen für die vorzugsweise dicht besiedelten Stadtgebiete erfindungsgemäß die Atemluft durch einen Filter, der aus einem Vorfiltergerät besteht, das als Chemisorptionspaket ausgerüstet ist und einem dem Chemisorptionspaket nachgeschalteten krankheitserregerabscheidenden Filter zuzuführen.

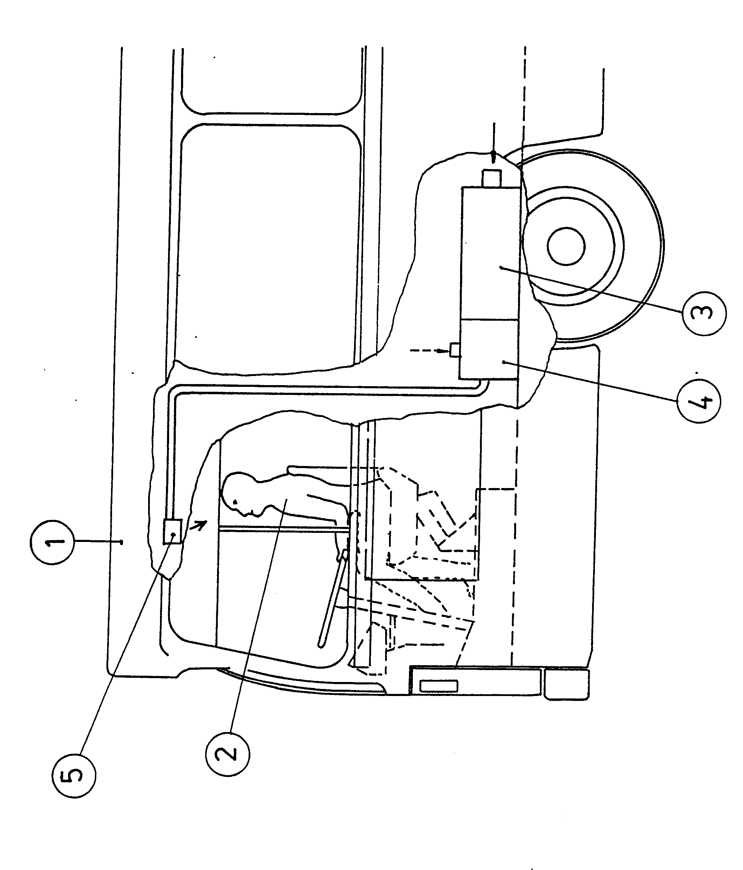

In der beiliegenden Zeichnung ist die erfindungsgemäße Ausführung dargestellt.

Mit 1 ist der Bus, mit 2 der Fahrer, mit 3 der hinter dem Fahrersitz angeordnete Chemisorptionsfilter mit der nachgeschalteten krankheitserregerabscheidenden Filterzelle 4 und mit 4 die Belüftungsdüsen oberhalb des Fahrers bezeichnet.

Weiter ist erfindungsgemäß dieser kombinierte chemisorptions-und krankheitserregerabscheidende Filter so geschaltet, daß er im Stadtbetrieb über Sensorsteuerung das Chemisorptionspaket dann einschaltet, wenn Schadstoffbelastungen aus dem Straßenverkehr vorliegen und der krankheitserregerabscheidende Filter auch ohne den Chemisorptionsfilter Luft aus den Innenbereich des Fahrzeuges direkt oder auch über eine Klimaanlage gekuppelt die gesunde Atemluft dem Fahrer zuführt.

Selbstverständlich kann diese kombinierte chemisorptionskrankheitserregerabbauende Filteranordnung auch in anderen Fahrzeugen (LKW-Fahrzeugen und PKW-Fahrzeugen) Anwendung finden.

Die Erfindung ist auch nicht auf die im einzelnen beschriebene und dargestellte Ausbildungsform beschränkt, sondern es sind zahlreiche Abänderungen möglich, ohne jedoch von dem Grundgedanken abzuweichen, einen Filter zur Belüftung-vorzugsweise für den Stadtbusfahrer -so herzustellen, daß er aus einem Chemisorptionspaket besteht, das vorzugsweise über Sensorsteuerungen die durch den Strasenverkehr belastete Atemluft von sauren Bestandteilen, Kohlenwasserstoffen und CO befreit und die im Atembereich zuzuführende Luft unbedenklich reinigt -incl. der Staubpartikelabscheidung -, um dann diese vorgereinigte Luft einem nachgeschalteten krankheitserregerabscheidenden Filter zuzuführen, der dann die zweistufig gereinigte Atemluft dem Fahrer -vorzugsweise über Kopfdüsenanordnung - zuführt, wobei für normale Fahrzeuge, die nicht nur im Stadtverkehr eingesetzt werden, der Atemluftbereich auch direkt durch einen Staubfilter mit nachgeschal tetem krankheitserregerabscheidenden Filtersystem ausgeführt sein kann.

Krankheitserregerabscheidende Filter sind in der Technik bekannt, vorzugsweise sind für Batteriestrom auszulegende UV-Röhren vorgesehen.

**Ansprüche**

1. Verfahren zur Zuführung von gesunder Atemluft für den vorzugsweise Busfahrer, dadurch gekennzeichnet, daß die anzusaugende, dem Fahrer zuzuführende Atemluft zuerst durch einen Chemisorptionsfilter geführt wird, der die durch Straßenverkehr belastete Luft durch die Chemisorption reinigt, um sie dann einer nachgeschalteten Filterstufe zur Abscheidung von Krankheitserregern zuzuführen, und die mehrstufig gereinigte Atemluft vorzugsweise über Kopfdüsenanordnung dem Fahrer nicht mehr gesundheitsbelastend zugeführt wird.

2. Verfahren nach Anspruch 1, dadurch gekennzeichnet, daß der Chemisorptionsfilter vorzugsweise dem krankheitserregerabscheidenden Filter vorgeschaltet ist und über vorzugsweise Sensorsteuerung bei entsprechender Belastung der Luft durch Schadstoffe der Chemisorptionsfilter sich automatisch zuschaltet und die gereinigte Luft dem krankheitserregerabscheidenden Filter zwangsweise zuführt.

3. Verfahren nach Anspruch 1 oder 2, dadurch gekennzeichnet , daß der krankheitserregerabscheidende Filter auch direkt die Luft aus dem vorzugsweise Fahrzeuginneren ohne Vorschaltung des Chemisorptionsfilters absaugen kann.

4. Verfahren nach Anspruch 1 oder einem der vorhergehenden, dadurch gekennzeichnet, daß der krankheitserregerabscheidende Filter vorzugsweise mit UV-Röhren ausgerüstet ist und entsprechend dem Batterieanschluß der Fahrzeuges ausgebildet ist.